# EUROPÄISCHE PATENTSCHRIFT

(11) **EP 2 189 262 B1**
(45) Veröffentlichungstag und Bekanntmachung des Hinweises auf die Patenterteilung: **15.06.2011**
(21) Anmeldenummer: 09172311.4
(22) Anmeldetag: 06.10.2009
(51) Int. Cl.: B28B 11/14, B26D 1/553, B23D 57/00

(54) **Verfahren und Schneideinrichtung zum Schneiden von schneidfesten Leichtbetonkuchen in Leichtbetonformkörper sowie Verfahren und Vorrichtung zur Herstellung von Leichtbetonformkörpern**
Method and device for cutting cut-resistant lightweight concrete cakes in lightweight concrete blocks and method and device for producing lightweight concrete blocks
Procédé et dispositif pour la coupe d'une galette de béton léger résistant à la coupe dans des corps de moulage en béton léger ainsi que procédé et dispositif destinés à la fabrication de corps de moulage en béton léger

(30) Priorität: 04.11.2008 DE 102008055740
(43) Veröffentlichungstag der Anmeldung: 26.05.2010
(73) Patentinhaber: Xella Baustoffe GmbH, 47119 Duisburg (DE)
(72) Erfinder: Heerens, Ingo, 84478, Waldkraiburg (DE); Builleul, Guido, 38510, Courtenay (FR)
(74) Vertreter: Solf, Alexander

(56) Entgegenhaltungen:
- DE-A1- 2 502 866
- DE-A1- 19 511 746
- JP-A- 61 134 205

## Beschreibung

Die vorliegende Erfindung betrifft eine Schneideinrichtung und ein Verfahren zum Schneiden von schneidfesten Leichtbetonkuchen, insbesondere Poren- oder Schaumbetonkuchen, in Leichtbetonformkörper, insbesondere in Poren- oder Schaumbetonformkörper. Des Weiteren betrifft die vorliegende Erfindung eine Vorrichtung und ein Verfahren zur Herstellung von Leichtbetonformkörpern, insbesondere Poren- oder Schaumbetonformkörpern.

Es sind zahlreiche Möglichkeiten bekannt, schneidfeste Leichtbetonkuchen zu schneiden.

Beispielsweise ist es bekannt, Porenbetonkuchen in einer Gießform zu gießen und sobald der Porenbetonkuchen seine Grünfestigkeit erreicht hat, die gesamte Gießform auf eine Formlängswand, den so genannten Härteboden zu kippen, und anschließend die anderen Formwände abzunehmen. Der so auf einer seiner Längsseiten stehende Porenbetonkuchen wird zum Längsschneiden z.B. mit seiner Stirnseite voraus in Längsrichtung durch einen Schneidrahmen mit sich horizontal und senkrecht zur Längsrichtung erstreckenden Schneiddrähten durchgeführt. Zum Querschneiden wird z.B. der gesamte Porenbetonkuchen in vertikaler Richtung nach oben durch einen Schneidrahmen mit sich horizontal und ebenfalls senkrecht zur Längsrichtung erstreckenden Schneiddrähten durchgedrückt und anschließend wieder abgesenkt. Alternativ dazu wird der Schneidrahmen abgesenkt und wieder nach oben geführt. Zum Schneiden in vertikaler Richtung parallel zu den Querseiten wird dieser z.B. in Längsrichtung durch sich vertikal erstreckende Messerleisten durchgeführt bzw. diese durch den Porenbetonkuchen durchgezogen. Der geschnittene Porenbetonkuchen wird anschließend auf dem Härteboden stehend dampfgehärtet. Nachteilig dabei ist, dass die Schnittflächen beim Härten aufeinander liegen, so dass keine sehr glatten Schnittflächen erzeugbar sind. Denn die einzelnen geschnittenen Porenbetonformkörper "backen" an ihren Schnittflächen aneinander, so dass die Porenbetonformkörper nach dem Härten mechanisch durch auseinander Ziehen betrennt werden müssen.

Aus der DE 900 189 ist ein gattungsmäßiges Verfahren und eine Schneideinrichtung zum Schneiden von in einer Form gegossenen, grünfesten Porenbetonkuchen bekannt. Bei diesem Verfahren wird zum Gießen des Porenbetonkuchens eine Form verwendet, deren Boden durch mehrere sich parallel zueinander in eine Querrichtung des Porenbetonkuchens erstreckende Bodenbretter gebildet wird. Die Bodenbretter sind beabstandet zueinander angeordnet, so dass zwischen zwei Bodenbrettern jeweils ein schlitzförmiger Zwischenraum frei gelassen ist. Die Zwischenräume dienen dazu, nach unten durchtretende Schneiddrähte durchzulassen. Nachdem der Porenbetonkuchen seine Grünfestigkeit erreicht hat, wird der Porenbetonkuchen mit den Bodenbrettern in eine Schneidvorrichtung übergeführt. Die Schneidvorrichtung weist mehrere parallel zueinander und benachbart zueinander angeordnete, längliche Stützbretter auf. Die Stützbretter entsprechen der Form nach den Bodenbrettern, wobei zwischen den einzelnen Stützbrettern ebenfalls jeweils ein Zwischenraum gebildet ist. Zum Schneiden werden die Bodenbretter der Form auf den Stützbrettern positioniert, so dass jeweils ein Bodenbrett auf einem Stützbrett angeordnet ist. Die Stützbretter sind einzeln in vertikaler Richtung auf und ab antreibbar. Zum Schneiden des Porenbetonkuchens in Längsrichtung, also zur Durchführung eines Längsschnitts und eines Vertikalschnitts, wird ein vertikaler Schnittrahmen mit sich in vertikaler und sich quer dazu in horizontaler Richtung erstreckenden Schneiddrähten durch den Porenbetonkuchen in horizontaler Längsrichtung durchgezogen. Dabei werden die Stützbretter und mit diesen die darauf angeordneten Bodenbretter einzeln abgesenkt, damit der Schneidrahmen zwischen den Bodenbrettern und einer Unterseite des Porenbetonkuchens durchgeführt werden kann. Nach diesem Schneidvorgang wird gegebenenfalls noch ein Schnitt von oben nach unten durchgeführt, wobei die Schneiddrähte zwischen den Zwischenräumen zwischen den Stützbrettern und den Bodenbrettern durchtreten. Anschließend wird der liegende Porenbetonkuchen mit den Bodenbrettern im Autoklaven dampfgehärtet.

Ein weiteres gattungsgemäßes Verfahren und eine Schneideinrichtung zum Schneiden von in einer Form gegossenen, grünfesten Porenbetonkuchen ist aus der EP 0 280 350 B1 bekannte. Bei diesem Verfahren wird der grünfeste, aus der Gießform entnommene Porenbetonkuchen durch eine Schneidvorrichtung durchgefahren, die einen Schneidrahmen mit darin eingespannten, sich vertikal erstreckenden Schneiddrähten aufweist. Die Schneiddrähte sind zur Erzeugung einer glatten Schnittfläche in ihre Längsrichtung oszillierend antreibbar. Der Porenbetonkuchen wird der Schneidvorrichtung auf einem Tragrahmen mit Querträgern zugeführt, wobei auf den Querträgern vertikal nach oben abstehende Stifte vorgesehen sind und zwischen den Stiften lose Längsstäbe angeordnet sind, auf denen der Porenbetonkuchen mit seiner Unterseite aufliegt. Die Längsstäbe stehen dabei hochkant auf ihren Schmalseiten. Zum Schneiden wird der Tragrahmen abgesenkt und der Block nur noch auf den Längsstäben aufliegend durch die Vorrichtung durch gefahren, wobei die Schneiddrähte zwischen den Zwischenräumen zwischen den Längsstäben durchgeführt werden. Nach dem Schneiden wird der geschnittene Porenbetonkuchen mit den Längsstäben wieder auf einem Tragrahmen positioniert und mit diesem und den Längsstäben liegend im Autoklaven dampfgehärtet. Vorteilhaft ist hierbei, dass aufgrund der mit hoher Frequenz oszillierenden Drähte sehr glatte, sich längs erstreckende Schnittflächen erzielt werden können, die auch nicht wieder beim Härten verkleben, da die Schnittflächen beim Härten nicht aufeinander liegen.

Sollen die Porenbetonkuchen vor dem Längsschneiden gemäß der EP 0 280 350 B1 quer geschnitten werden, wird der Porenbetonkuchen aus der Form mittels einer geeigneten Greifvorrichtung heraus gehoben und auf einem Schneidrost abgelegt. Über dem Schneidrost werden vorher horizontale, sich in eine Querrichtung des Porenbetonkuchens erstreckende Schneiddrähte gespannt. Die Schneiddrähte werden anschließend von unten nach oben durch den Porenbetonkuchen durchgezogen. Danach werden die entstandenen Schneidspalte geschlossen, indem die einzelnen erzeugten Porenbetonformkörper mittels Stoßen zusammen geschoben werden. Dies ist notwendig, um zu verhindern, dass beim anschließenden Längsschneiden aufgrund der Spalten keine Ecken ausreißen. Infolgedessen besteht die Gefahr, dass die sich quer erstreckenden Schnittflächen beim Härten miteinander verkleben.

JP-A-61 134 205 offenbart eine Schneideinrichtung zum Schneiden eines schneidfesten Leichtbetonkuchens gemäß dem Oberbegriff des Anspruchs 1.

Bei einem weiteren bekannten Verfahren, bei dem die Längsstäbe verwendet werden, wird der Porenbetonkuchen mit den Längsstäben auf sich horizontal und quer zu den Längsstäben erstreckende Querleisten aufgelegt. Stabunterseiten liegen also auf den Querleisten auf. Die Querleisten sind vertikal einzeln auf und ab bewegbar. Zum Schneiden wird ein vertikaler Schneidrahmen mit sich vertikal erstreckenden Schneiddrähten in Längsrichtung durch den liegenden Porenbetonkuchen durchgezogen. Dabei werden die Querleisten nacheinander einzeln abgesenkt, damit der Schneidrahmen zwischen den Stabunterseiten und den Querleisten hindurch geführt werden kann.

Üblicherweise wird der Porenbetonkuchen bei einem Verfahren, bei dem die Längsstäbe verwendet werden, mittels einer Greifvorrichtung, die den Porenbetonkuchen, nachdem die Formwände der Gießform weg geklappt wurden, an allen Seiten umgreift, aus der Form gehoben und auf den Längsstäben abgelegt. Das Querschneiden erfolgt z.B. vor dem Längsschneiden, indem Schneiddrähte in horizontaler Querrichtung über die Längsstäbe gespannt werden, bevor der Porenbetonkuchen auf diesen abgelegt wird und die Schneiddrähte anschließend nach oben durch den Porenbetonkuchen durchgezogen werden. Nachteilig bei diesem Verfahren ist, dass die auf ihrer schmalseite hochkant stehenden Längsstäbe auf der Unterseite des Porenbetonkuchens Abdrücke hinterlassen. Zudem ist beim Längsschneiden der Abstand zueinander benachbarter vertikaler Schneiddrähte nicht vollständig variabel, sondern nur in einem durch die Längsstäbe vorgegebenen Raster einstellbar. Die Längsstäbe sind zudem, da sie alle einzeln sind, kompliziert im Handling. Außerdem ist nachteilig, dass die Längsstäbe mit gehärtet werden müssen, da sie dabei wiederholt thermisch beansprucht werden und sich verbiegen. Auch die nach jedem Zyklus notwendige Reinigung der Längsstäbe ist aufwendig, da sie alle einzeln gereinigt werden müssen.

Des Weiteren ist es bekannt einen Härterost mit sich quer erstreckenden Querleisten zu verwenden, auf den der Porenbetonkuchen wie oben beschrieben mit einer Greifvorrichtung mit seiner Unterseite aufgelegt wird. Über dem Härterost werden zuvor sich in Längs- und in Querrichtung erstreckende Schneiddrähte gespannt und diese nach dem Auflegen des Porenbetonkuchens nach oben durch diesen durchgezogen. Der Porenbetonkuchen wird anschließend liegend gehärtet.

Außerdem ist es bekannt, den Porenbetonkuchen wie ebenfalls bereits oben beschrieben auf den Härteboden zu kippen und auf dem Härterost zu schneiden. Nach dem Schneiden wird an die Unterseite des Porenbetonkuchens von der Seite her ein Härterost angedrückt und der Porenbetonkuchen auf den Härterost gekippt, so dass er mit seiner Unterseite auf diesem zu liegen kommt. Anschließend wird der Porenbetonkuchen auf dem Härterost liegend gehärtet. Vorteilhaft hierbei ist, dass die Schnittflächen zwar nach dem Schneiden aneinander liegen, aber durch das Kippen auf den Härteboden entlastet werden, so dass das "Anbacken" vermindert wird.

Aufgabe der vorliegenden Erfindung ist die Bereitstellung einer Schneideinrichtung und eines Verfahrens zum Schneiden von schneidfesten Leichtbetonkuchen, insbesondere Poren- oder Schaumbetonkuchen, in Leichtbetonformkörper, insbesondere Poren- oder Schaumbetonformkörper, wobei das Schneiden auf einfache und schnelle Weise möglich sein soll.

Weitere Aufgabe der vorliegenden Erfindung ist die Bereitstellung einer Vorrichtung und eines Verfahrens zur Herstellung von Leichtbetonformkörpern, insbesondere Poren- oder Schaumbetonformkörper, wobei die Herstellung, insbesondere das Schneiden auf einfache und schnelle Weise möglich sein soll.

Diese Aufgaben werden durch mit den Merkmalen der Ansprüche 1, 12, 13 und 24 gelöst. Vorteilhafte Weiterbildungen der Erfindung sind in den sich anschließenden Unteransprüchen gekennzeichnet.

Im Folgenden wird die Erfindung anhand einer Zeichnung beispielhaft näher erläutert. Es zeigen:
- Figur 1:: Eine schematische stirnseitige perspektivische Ansicht eines auf einem Härterost aufliegenden Leichtbetonkuchens, angeordnet oberhalb von absenkbaren Querleisten
- Figur 2:: Eine Seitenansicht des auf dem Härterost aufliegenden Leichtbe- tonkuchens, angeordnet oberhalb der absenkbaren Querleisten
- Figur 3:: Eine Seitenansicht des auf den Querleisten aufliegenden Leicht- betonkuchens mit abgesenktem Härterost
- Figur 4:: Eine schematische seitliche perspektivische Ansicht des auf den teilweise abgesenkten Querleisten aufliegenden Leichtbetonku- chens mit abgesenktem Härterost und Schneidrahmen
- Figur 5:: Eine schematische stirnseitige perspektivische Ansicht des auf dem Härterost aufliegenden geschnittenen Leichtbetonkuchens, abgehoben von den Querleisten

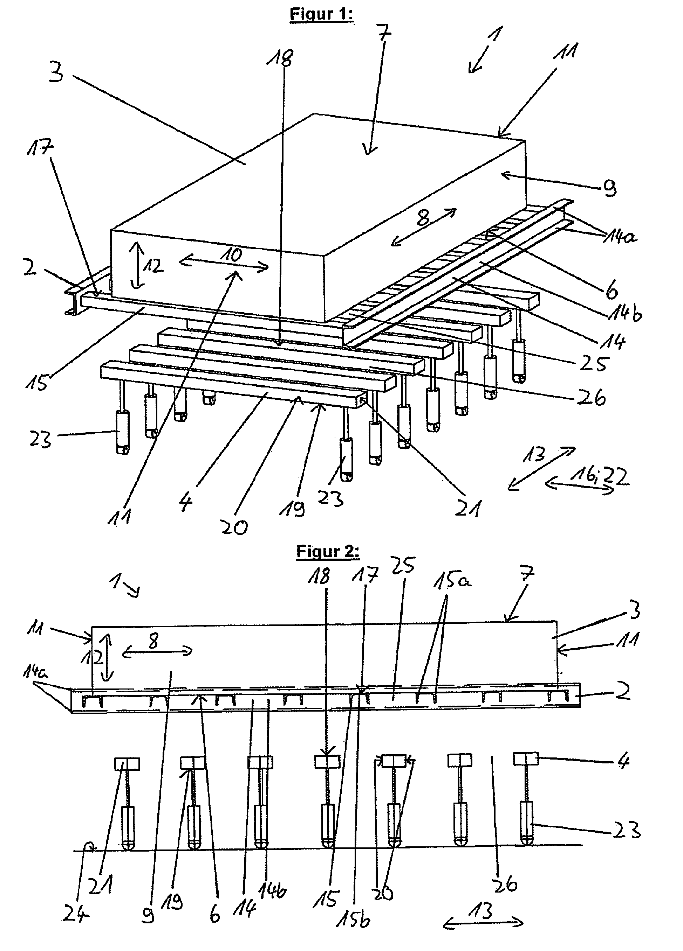

Die erfindungsgemäße Schneideinrichtung 1 zum Schneiden von Leichtbetonkuchen 3 weist einen Härterost 2 zur Aufnahme und zum Transport des schneidfesten Leichtbetonkuchens 3, insbesondere eines Poren- oder Schaumbetonkuchens 3, mehrere sich horizontal erstreckende, in vertikaler Richtung auf und ab bewegbare bzw. antreibbare Querleisten 4, eine Hubeinrichtung zum Anheben und Absenken des Härterosts 2 und einen Schneidrahmen 5 zum Schneiden, insbesondere Längsschneiden des Leichtbetonkuchens 3 auf (Fig. 1-5).

Der Leichtbetonkuchen 3 ist vorzugsweise quaderförmig ausgebildet und weist eine im wesentlichen ebene, nach dem Gießen zuunterst angeordnete, Kuchenunterseite 6, eine dazu parallele Kuchenoberseite 7, zwei sich gegenüberliegende, im wesentlichen ebene, zu der Kuchenunterseite 6 senkrechte und sich in eine Kuchenlängsrichtung 8 erstreckende Kuchenlängsseiten 9 und zwei zu den Kuchenlängsseiten 9 und zur Kuchenunterseite 6 senkrechte, sich in eine Kuchenquerrichtung 10 erstreckende Kuchenstirnseiten 11 auf. Der Leichtbetonkuchen 3 weist eine Längserstreckung in Richtung der Kuchenlängsrichtung 8 auf. Zudem ist seine Erstreckung in Kuchenquerrichtung 10 größer als in eine Kuchenhöhenrichtung 12.

Der Härterost 2 weist zwei zueinander beabstandet angeordnete, sich in eine Rostlängsrichtung 13 erstreckende Längsbalken 14 und mehrere ebenfalls zueinander beabstandet angeordnete, sich senkrecht zu den Längsbalken 14 in eine Rostquerrichtung 16 erstreckende Querbalken 15 auf. Die Querbalken 15 sind jeweils vorzugsweise zwischen den beiden Längsbalken 14 angeordnet und verbinden diese miteinander. Die Längsbalken 14 sind jeweils im Bereich von End- bzw. Stirnseiten der Querbalken 15 angeordnet. Die Querbalken 15 erstrecken sich von dem einen Längsbalken 14 zum anderen Längsbalken 14. Die Balken 14;15 sind miteinander fest verbunden, insbesondere verschraubt und/oder vernietet und/oder verschweißt. Die einzelnen Querbalken 15 sind in Rostlängsrichtung 13 zueinander benachbart bzw. hintereinander und voneinander beabstandet angeordnet. Infolgedessen ist zwischen je zwei zueinander benachbarten Querbalken 15 jeweils ein Balkenzwischenraum 25 vorhanden. Der Abstand zweier zueinander benachbarter Querbalken 15 voneinander ist dabei so bemessen, dass eine Querleiste 4 dazwischen durchführbar ist bzw. einen Balkenzwischenraum 25 in vertikaler Richtung passieren kann. Insbesondere beträgt der Abstand 20 bis 150 mm, bevorzugt 50 bis 100 mm. Die Querbalken 15 weisen zudem jeweils eine ebene bzw. ebenflächige Balkenoberseite 17 auf, wobei die Balkenoberseiten 17 der einzelnen Querbalken 15 zueinander koplanar und in Rostlängsrichtung 13 zueinander fluchtend angeordnet sind. Die Balkenoberseiten 17 sind zudem parallel zur Rostlängsrichtung 13 und zur Rostquerrichtung 16. Zweckmäßigerweise sind die Balken 14;15 zudem als U-Profile ausgebildet und weisen jeweils zwei U-Schenkel 14a;15a und eine U-Basis 14b;15b auf. Die Außenseite der U-Basis 15b bildet dabei die Balkenoberseite 17. Die U-Schenkel 14a der Längsbalken 14 weisen zweckmäßigerweise von den Querbalken 15 weg.

Die Querleisten 4 weisen vorzugsweise einen rechteckigen Querschnitt auf. Des Weiteren weisen die Querleisten 4 jeweils eine ebene bzw. ebenflächige, horizontale Leistenoberseite 18 auf. Zweckmäßigerweise weisen die Querleisten 4 zudem jeweils eine zur Leistenoberseite 18 parallele Leistenunterseite 19 und zwei dazu senkrechte, vertikale Leistenlängsseiten 20, sowie zwei zu den Leistenlängsseiten 20 und zu der Leistenoberseite 18 senkrechte Leistenstirnseiten 21 auf. Die Querleisten 4 weisen eine Längserstreckung in Richtung einer horizontalen Leistenlängsachse 22 auf. Außerdem weisen die Querleisten 4 Antriebsmittel zum Auf- und Abfahren der Querleisten 4 in vertikaler Richtung bzw. zum Anheben und Absenken der Querleisten 4 in vertikaler Richtung auf. Bei diesen Antriebsmitteln handelt es sich vorzugsweise um Hydraulikzylinder 23. Dabei sind pro Querleiste 4 zweckmäßigerweise zumindest zwei Hydraulikzylinder 23 vorgesehen, die jeweils stirnseitig angeordnet sind und einendig an der Leistenunterseite 19 angeordnet sind. Andernendig stützen sich die Hydraulikzylinder 23 an einem Boden 24 ab. Die Hydraulikzylinder 23 erstrecken sich in vertikaler Richtung. Zudem sind die Hydraulikzylinder 23 in vertikaler Richtung aus- und einfahrbar, sowie einzeln ansteuerbar.

Alternativ kann z.B. auch nur ein Hydraulikzylinder 23 pro Querleiste 4 in Kombination mit einer Parallelführung vorgesehen sein.

Die Querleisten 4 sind in einer zur Leistenlängsachse 22 senkrechten, horizontalen Richtung zueinander benachbart bzw. hintereinander und voneinander beabstandet angeordnet, so dass zwischen den zueinander benachbarten Querleisten 4 Leistenzwischenräume 26 gebildet sind. Der Abstand zweier zueinander benachbarter Querleisten 4 voneinander ist dabei so bemessen, dass ein Querbalken 15 in vertikaler Richtung dazwischen durchführbar ist. Insbesondere beträgt der Abstand 20 bis 150 mm, bevorzugt 50 bis 100 mm.

Der Schneidrahmen 5 weist mehrere sich zweckmäßigerweise im wesentlichen vertikal erstreckende Schneiddrähte 27 auf, die in ein Rahmengestell 28 eingespannt sind. Das Rahmengestell 28 weist zweckmäßigerweise zwei sich horizontal und parallel zur Leistenlängsachse 22 erstreckende Rahmenstreben 28a und zwei die beiden horizontalen Rahmenstreben 28a miteinander verbindende, sich zweckmäßigerweise vertikal erstreckende Verbindungsrahmenstreben 28b auf. Die Schneiddrähte 27 und der gesamte Schneidrahmen 5 können aber auch um eine zur Leistenlängsrichtung 22 parallele Achse und/oder um eine zur Leistenlängsrichtung 22 senkrechte, horizontale Achse in Bezug zur Vertikalen geneigt sein.

Die Schneiddrähte 27 sind in einer zu ihrer Längserstreckung parallelen Richtung, insbesondere mit einer Frequenz von 90 bis 70 Hz, bevorzugt 25 bis 45 Hz oszillierend antreibbar. Zudem ist der gesamte Schneidrahmen 5 in eine horizontale, zur Leistenlängsrichtung 22 parallele Rahmenantriebsrichtung 29, insbesondere hin- und her antreibbar. Nach einer weiteren Ausführungsform ist der Schneidrahmen 5 zudem in eine zur Rahmenantriebsrichtung 29 senkrechte, horizontale Querantriebsrichtung 31, insbesondere hin- und her, antreibbar. Durch eine Überlagerung der Bewegung des Schneidrahmens 5 sowohl in Rahmenantriebsrichtung 29, als auch in Querantriebsrichtung 31 ist es möglich, beliebige, insbesondere auch kurvenförmige Konturen zu schneiden.

Nach einer weiteren Ausführungsform weist der Schneidrahmen 5 zudem zumindest eine, vorzugsweise zwei Stützleisten (nicht dargestellt) auf. Die Stützleisten erstrecken sich parallel zur Leistenlängsachse 22 und weisen jeweils eine horizontale Stützleistenoberseite auf. Die Stützleisten dienen zur zusätzlichen Stützung des Leichtbetonkuchens 3 während des Schneidens und sind dazu unten am Rahmengestell 28 angeordnet. Zudem ist zumindest eine Stützleiste fest mit dem Rahmengestell 28 verbunden und in Rahmenantriebsrichtung 29 gesehen vor den Schneiddrähten 27 angeordnet. Die zweite Stützleiste ist ebenfalls fest mit dem Rahmengestell 28 verbunden, allerdings in Rahmenantriebsrichtung 29 gesehen hinter den Schneiddrähten 27 angeordnet. Des Weiteren überragen die Stützleisten mit ihren Stützleistenoberseiten die untere der beiden Rahmenstreben 28a vorzugsweise in vertikaler Richtung. Zudem erstrecken sich die Stützleisten zweckmäßigerweise über die gesamte Breite des Rahmengestells 28, also dessen Erstreckung parallel zur Leistenlängsrichtung 22.

Nach einer weiteren Ausführungsform weist der Schneidrahmen 5 zudem eine sich parallel zur Leistenlängsrichtung 22 erstreckende Messerleiste auf, mittels der die Kuchenunterseite 6 begradigt werden kann, also ein Vertikalschnitt durchführbar ist. Die Messerleiste ist fest mit dem Rahmengestell 28 verbunden und unten am Rahmengestell 28 angeordnet. Des Weiteren erstreckt sich die Messerleiste zweckmäßigerweise ebenfalls über die gesamte Breite des Rahmengestells 28, also dessen Erstreckung parallel zur .Leistenlängsrichtung 22. Die Messerleiste ist vorzugsweise in Rahmenantriebsrichtung 29 gesehen vor den Schneiddrähten 27 angeordnet. Vorzugsweise ist zudem eine weitere Messerleiste zum Begradigen der Kuchenoberseite 7 oben am Rahmengestell 28 angeordnet.

Alternativ zur oberen Messerleiste kann die erfindungsgemäße Schneideinrichtung 1 eine Fräswalze oder Schnecke zum Begradigen der Kuchenoberseite 7 aufweisen. Die Fräswalze oder Schnecke ist um eine zur Leistenlängsrichtung 22 parallele Achse drehbar antreibbar und zudem in Rahmenantriebsrichtung 29 antreibbar, so dass sie über die Kuchenoberseite 7 ziehbar ist.

Im Folgenden werden die erfindungsgemäßen Verfahren unter Verwendung der erfindungsgemäßen Schneideinrichtung 1 und der erfindungsgemäßen Vorrichtung näher erläutert:

Zunächst wird in an sich bekannter Weise der Leichtbetonkuchen 3 durch Gießen in einer nach oben offenen Gießform (nicht dargestellt) hergestellt. Dabei wird die Gießform mit Frischbetonmasse befüllt und gegebenenfalls Bewehrungsmittel in die Gießform eingehängt. Zur Herstellung von Porenbetonkuchen 3 wird dabei eine Frischbetonmasse verwendet, die zumindest einen Treibporenbildner, insbesondere feinteiliges Aluminium z.B. in Form von Aluminiumpulver oder -paste, aufweist. Zur Herstellung von Schaumbetonkuchen 3 wird eine Frischbetonmasse verwendet, die bereits zugemischte Luftporen enthält.

Nach dem Einfüllen der Frischbetonmasse und dem Einsetzten der Bewehrungsmittel wird die Frischbetonmasse für ungefähr 1 bis 3 h Ansteifen und gegebenenfalls Gären gelassen, bis die Frischbetonmasse 39 eine ausreichende Schneidfestigkeit erreicht hat und ein Leichtbetonkuchen 3 entstanden ist. Sobald der Leichtbetonkuchen 3 die ausreichende Grün- und Schneidfestigkeit erreicht hat, wird er aus der Gießform entnommen. In der Gießform ist der Leichtbetonkuchen 3 mit seiner Kuchenunterseite 6 zuunterst angeordnet.

Nach einer ersten Ausführungsform des Herstellungsverfahrens wird der schneidfeste Leichtbetonkuchen 3 zunächst mitsamt der Gießform um eine horizontale, zur Kuchenlängsrichtung 8 parallele Achse gekippt, so dass er mit einer seiner beiden Kuchenlängsseiten 9 auf einer Formlängswand der Gießform zu liegen kommt. Anschließend wird ein Vertikalschnitt durchgeführt. Vertikalschneiden bedeutet, dass eine Schnittfläche erzeugt wird, die parallel zur Kuchenlängsrichtung 8 und parallel zur Kuchenquerrichtung 10 ist. Insbesondere werden beim Vertikalschnitt die Kuchenunterseite 6 und die Kuchenoberseite 7 begradigt. Dabei wird der Leichtbetonkuchen 3 mittels sich vertikal erstreckenden Messerleisten geschnitten, die in einer zur Kuchenlängsrichtung 8 parallelen Richtung durch den Leichtbetonkuchen 3 durchgeführt werden. Dabei wird der Leichtbetonkuchen 3 relativ zu den Messerleisten in Kuchenlängsrichtung 8 bewegt und/oder die Messerleisten relativ zum Leichtbetonkuchen 3 in Kuchenlängsrichtung 8 bewegt.

Zweckmäßigerweise wird danach oder vor dem Vertikalschneiden der Leichtbetonkuchen 3 quer geschnitten. Querschneiden bedeutet, dass Schnittflächen erzeugt werden, die parallel zur Kuchenquerrichtung 10 und zur Kuchenhöhenrichtung 12 sind. Dies erfolgt mittels eines Schneidrahmens mit sich horizontal und parallel zur Kuchenhöhenrichtung 12 erstreckenden Schneiddrähten, die in Kuchenlängsrichtung 8 hintereinander angeordnet sind. Der auf der Formlängswand stehende Leichtbetonkuchen 3 wird in vertikaler Richtung von unten nach oben und zweckmäßigerweise wieder zurück von oben nach unten durch den Schneidrahmen durchgefahren. Alternativ dazu wird der Schneidrahmen in vertikaler Richtung von oben nach unten und zweckmäßigerweise wieder zurück von unten nach oben durch den Leichtbetonkuchen durchgefahren.

Danach wird der Härterost 2 an die Kuchenunterseite 6 angesetzt. Dabei werden die Querbalken 15 parallel zur Kuchenquerrichtung 10 und mit ihren Balkenoberseiten 18 der Kuchenunterseite 6 zugewandt positioniert. Dann wird der Leichtbetonkuchen 3 um eine horizontale, zur Kuchenlängsrichtung 8 parallele Achse gekippt, so dass er mit einer seiner Kuchenunterseite 6 auf den Balkenoberseiten 18 zu liegen kommt (Fig. 1, 2).

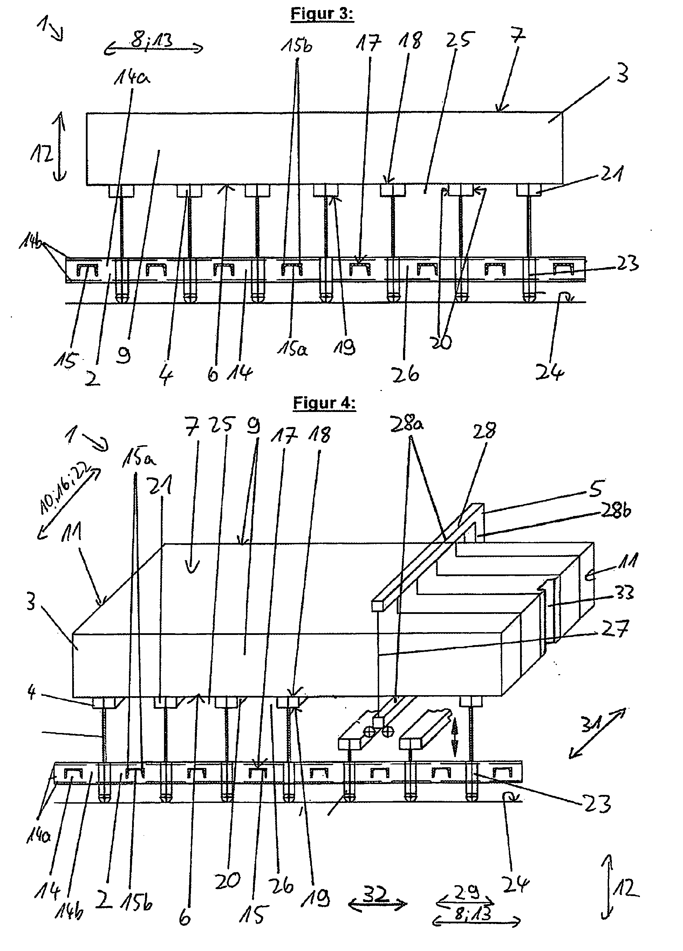

Anschließend wird der Härterost 2 mittels einer geeigneten Hubeinrichtung der erfindungsgemäßen Schneideinrichtung, z.B. eines Krans, angehoben und in eine Position oberhalb der Querleisten 4 verfahren. Die Querleisten 4 sind in ihrer ausgefahrenen, oberen Position. Der Härterost 2 wird so positioniert, dass die Querbalken 15 parallel zu den Querleisten 4 ausgerichtet sind, wobei die Querbalken 15 vertikal fluchtend zu den bzw. über den Leistenzwischenräumen 26 angeordnet sind und die Balkenzwischenräume 25 vertikal fluchtend zu den bzw. über den Querleisten 4 angeordnet sind. Dann wird der Härterost 2 mitsamt dem Leichtbetonkuchen 3 in vertikaler Richtung abgesenkt bis er auf dem Boden 24 aufsitzt, wobei die Querbalken 15 zwischen den Leistenzwischenräumen 26 durchgeführt werden und die Querleisten 4 durch die Balkenzwischenräume 25 durch tauchen. Da die Querleisten 4 den auf dem Boden 24 aufliegenden Härterost 2, insbesondere die Balkenoberseiten 17, vertikal überragen, wird der Leichtbetonkuchen 3 beim Absenken des Härterosts 2 von den Querleisten 4 von dem Härterost 2 abgehoben und kommt mit seiner Kuchenunterseite 6 auf den Leistenoberseiten 18 zu liegen (Fig. 3, 4). Die Kuchenlängsrichtung 8 ist dabei parallel zur Rahmenantriebsrichtung 29 und die Kuchenquerrichtung 10 ist parallel zur Querrichtung 31.

Zum durchgehenden Längsschneiden des Leichtbetonkuchens 3, also zum Erzeugen einer durchgehenden Schnittfläche, die parallel zur Kuchenlängsrichtung 8 und parallel zur Kuchenhöhenrichtung 12 ist, wird nun der Schneidrahmen 5 in Rahmenantriebsrichtung 29 verfahren und die Schneiddrähte 27 von einer der beiden Kuchenstirnseiten 11 her durch den gesamten Leichtbetonkuchens 3 durch gefahren. Unter einem durchgehenden Schnitt wird im folgenden ein Schnitt verstanden, bei dessen Durchführung die Schneiddrähte bzw. Schneidleisten durch den gesamten Leichtbetonkuchens 3 in eine einzige Richtung, also ohne Richtungswechsel, durch gefahren werden. Damit der Schneidrahmen 5 den Leichtbetonkuchen 3 ungehindert passieren kann, werden die Querleisten 4 nacheinander einzeln mittels der Hydraulikzylinder 23 abgesenkt, so dass die Querleisten 4 außerhalb der Bewegungsbahn des Schneidrahmens 5 liegen bzw. angeordnet sind (Fig. 4). Dadurch wird die untere Rahmenstrebe 28a zwischen der Kuchenunterseite 6 und der Leistenoberseite 18 der abgesenkten Leiste 4 durchgeführt und über den Härterost 2, der ebenfalls außerhalb der Bewegungsbahn des Schneidrahmens 5 liegt, hinweg geführt. Der Leichtbetonkuchen 3 wird dabei von den nicht abgesenkten Querleisten 4 ausreichend gestützt. Zweckmäßigerweise sind immer höchstens zwei bis drei zueinander benachbarte Querleisten 4 gleichzeitig abgesenkt, also nicht mehr im stützenden Eingriff mit der Kuchenunterseite 6.

Bei Vorhandensein zumindest einer Stützleiste wird der Leichtbetonkuchen 3 zudem zusätzlich an seiner Kuchenunterseite 6 durch die Stützleiste bzw. die beiden Stützleisten gestützt, in dem die Stützleistenoberseite jeweils an der Kuchenunterseite 6 entlang gleitet.

Bei Vorhandensein der Messerleisten wird zudem gleichzeitig mit dem Längsschnitt ein Vertikalschnitt durchgeführt, da die Verfahren des Schneidrahmens 5 derart durch den Leichtbetonkörper 3 durchgezogen werden, dass die Kuchenunterseite 6 und zweckmäßigerweise auch die Kuchenoberseite 7 begradigt werden.

Ist lediglich eine untere Messerleiste vorhanden, erfolgt die Begradigung der Kuchenoberseite 7 mittels der Fräswalze oder Schnecke, indem diese in Rahmenantriebsrichtung 29 über den Leichtbetonkuchen gezogen wird. Dies erfolgt zweckmäßigerweise vor dem Längsschneiden.

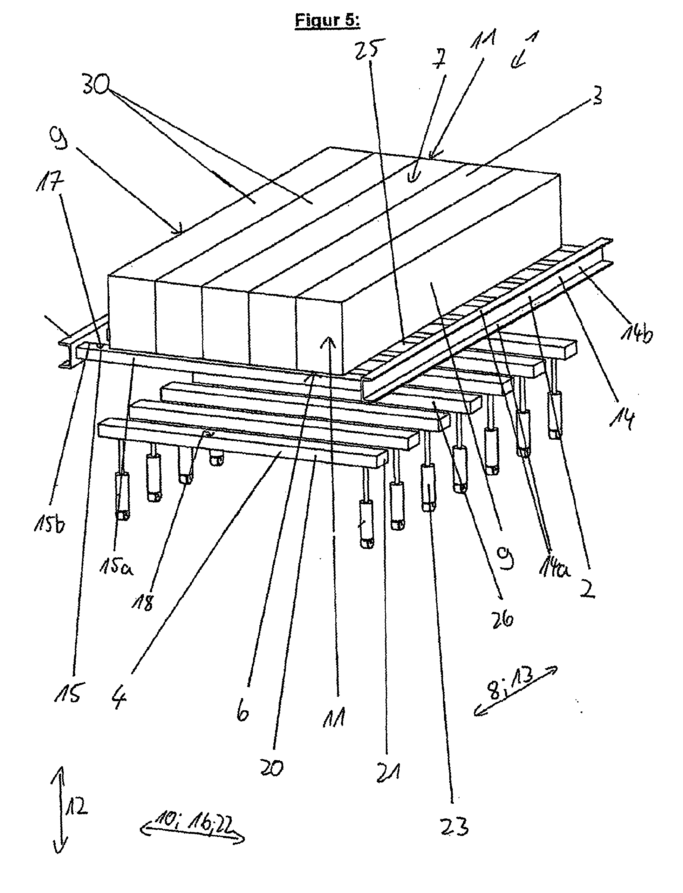

Wenn der Schneidrahmen 5 den gesamten Leichtbetonkuchen 3 einmal durchfahren hat und dieser in einzelne Leichtbetonformkörper 30 geteilt ist, wird der Härterost 2 mittels der Hubeinrichtung wieder angehoben, wobei wiederum die Querbalken 15 zwischen den Leistenzwischenräumen 26 durchgeführt werden und die Querleisten 4 durch die Balkenzwischenräume 25 durch tauchen. Dadurch wird der geschnittene Leichtbetonkuchen 3 wieder von dem Härterost 2 aufgenommen und kommt wieder mit seiner Kuchenunterseite 6 auf den Balkenoberseiten 17 zu liegen (Fig. 5). Der Härterost 2 mitsamt des geschnittenen Leichtbetonkuchens 3 wird mittels der Hubeinrichtung zum Autoklaven gefördert und der Leichtbetonkuchen 3 auf dem Härterost 2 in dem Autoklaven auf an sich bekannte Weise gehärtet.

Nach einer weiteren Ausführungsform des Herstellungsverfahrens werden, nachdem der Leichtbetonkuchen 3 seine Schneidfestigkeit erreicht hat, die Wände der Gießform seitlich weggeklappt und der Leichtbetonkuchen 3 an seinen Kuchenlängsseiten 9 und seinen Kuchenstirnseiten 11 mittels einer Greifeinrichtung (nicht dargestellt) der erfindungsgemäßen Vorrichtung gegriffen, von dem Boden der Gießform abgehoben und auf den Härterost 2 mit seiner Kuchenunterseite 6 aufgelegt. Anschließend wird der Härterost 2 wie oben beschrieben angehoben und zwischen den Querleisten 4 abgelegt.

Wenn gewünscht, können bei beiden Ausführungsformen des Herstellungsverfahrens zum Querschneiden, also zum Erzeugen einer Schnittfläche, die parallel zur Kuchenquerrichtung 10 und zur Kuchenhöhenrichtung 12 ist, vor dem Positionieren des Leichtbetonkuchens 3 auf dem Härterost 2 Schneiddrähte in Rostquerrichtung 16 über dem Härterost 2, gespannt werden. Nach dem Ablegen des Porenbetonkuchens 3 auf dem Härterost 2 werden die Schneiddrähte nach oben durch den Leichtbetonkuchen 3 durchgezogen.

Bei den erfindungsgemäßen Verfahren und der erfindungsgemäßen Schneideinrichtung ist von Vorteil, dass sehr glatte Schnittflächen erzeugbar sind, da die mittels den oszillierenden Drähten 27 erzeugten glatten Schnittflächen nach dem Schneiden nicht mehr aneinander gedrückt werden, so dass die glatten Schnittflächen auch nach dem Härten erhalten bleiben. Insbesondere müssen auch nach dem Querschneiden die erzeugten Formkörper nicht wieder zusammen gerückt werden, so dass auch die sich quer erstreckenden Schnittflächen nach dem Härten glatt bleiben. Des Weiteren sind die Abstände der Schneiddrähte 27 stufenlos variabel einstellbar. Insbesondere können deshalb mit dem erfindungsgemäßen Verfahren und der erfindungsgemäßen Schneideinrichtung 1 sehr dünne, längliche Leichtbetonbretter, so genannte Boards, mit variabler Dicke auf einfache und schnelle Weise durch die Durchführung lediglich eines durchgehenden Längsschnitts erzeugt werden. Insbesondere können Leichtbetonbretter mit einer Dicke, also einer Erstreckung in Kuchenquerrichtung 10 von 10 bits 750 mm, bevorzugt 25 bis 480 mm hergestellt werden, da die Leichtbetonbretter sicher auf den Querleisten 4 lagern und nicht zum Kippen neigen wie bei der Verwendung der Längsstäbe gemäß dem Stand der Technik. Lediglich bei sehr dünnen Boards kann es zusätzlich notwendig sein, diese durch an sich bekannte Drahtbügel zusätzlich zu halten.

Des Weiteren ist es mit dem erfindungsgemäßen Verfahren und der erfindungsgemäßen, einfach aufgebauten Schneideinrichtung 1 möglich, Drähte 27 mit aufgezogenen Perlen oder auch anderer Körper zu verwenden und dadurch ein z.B. sinusförmiges Muster an den Schnittflächen zu erzeugen. Dies ist möglich, da die Schnittflächen nach dem Schneiden nicht mehr aneinander gedrückt werden.

Besonders einfach ist auch das Handling des Leichtbetonkuchens 3 mit dem Härterost 2. Da der Leichtbetonkuchen 3 beim Schneiden lediglich direkt auf den Querleisten 4 aufliegt, ist die Schneidgenauigkeit nicht abhängig vom Härterost 2, so dass sich der wiederverwendbare Härterost 2 nach mehreren Härtezyklen geringfügig verformen kann. Zudem ist der kompakte Härterost 2 deutlich einfacher und somit kostengünstiger zu reinigen als die einzelnen, losen Längsstäbe gemäß dem Stand der Technik. Daneben hinterlässt der Härterost 2 wenig Abdrücke auf den Leichtbetonkuchen 3, da die Balkenoberseiten 17 breiter sind als die hochkant stehenden Längsstäbe. Zweckmäßigerweise weisen die Balkenoberseiten 17 eine Breite, also Erstreckung in Rostlängsrichtung 13 von 20 bis 150 mm, bevorzugt 50 bis 100 mm auf.

Besonders vorteilhaft ist es zudem, wenn der Leichtbetonkuchen 3 während des gesamten Verfahrens lediglich gekippt und nicht flach liegend gehoben wird, da die Festigkeit des Leichtbetonkuchens 3 beim Kippen nicht so hoch wie beim Heben sein muss und somit eine geringere Menge an Bindemittel verwendet werden kann.

Des Weiteren ist es aufgrund der zusätzlichen Bewegungsmöglichkeit des Schneidrahmens 5 in Querantriebsrichtung 31 und der damit verbundenen Möglichkeit, mit einem oder mehreren Richtungswechsein zu schneiden, möglich, nicht nur durchgehende, ebenflächige, sondern auch konturierte, z.B. gezackte Schnittflächen oder Schnittflächen mit Nut- und Feder oder auch gekrümmte, bogenförmige, insbesondere sinusförmige Schnittflächen zu erzeugen. Bei reiner Bewegung des Schneidrahmens 5 in Querantriebsrichtung 31 z.B. wird der Porenbetonkuchen 3 quer geschnitten, also Schnittflächenbereiche erzeugt, die parallel zur Kuchenhöhenrichtung 12 und parallel zur Kuchenquerrichtung 10 sind. Bei reiner Bewegung des Schneidrahmens 5 in Rahmenantriebsrichtung 29 wird der Porenbetonkuchen 3 längs geschnitten, also Schnittflächenbereiche erzeugt, die parallel zur Kuchenlängsrichtung 8 und parallel zur Kuchenhöhenrichtung 12 sind. Dadurch sind z.B. Nutt-und Feder herstellbar. Durch eine Überlagerung der Bewegung des Schneidrahmens 5 in Querantriebsrichtung 31 und in Rahmenantriebsrichtung 29 können insbesondere aber auch Bogensteine im grünfesten bzw. schneidfesten Zustand des Leichtbetonkuchens 3 hergestellt werden. Dies war bisher lediglich möglich, indem quaderförmige, gehärtete Leichtbetonkörper mit einer Säge auf die Bogenform zugesägt wurden. Außerdem sind Stirnnuten 33 herstellbar (Fig. 4).

Zudem liegt es auch im Rahmen der Erfindung, den Schneidrahmen 5 beim Schneiden ortsfest zu halten und die Querleisten 4 mitsamt Hydraulikzylindern 23, Leichtbetonkuchen 3 und Härterost 2 in eine zur Leistenlängsrichtung 22 senkrechte, horizontale Richtung und/oder in eine zur Leistenlängsrichtung 22 parallele Richtung durch den Schneidrahmen 5 durchzuführen. Das heißt die Einheit aus Querleisten 4 mitsamt ihren Antriebsmitteln, Leichtbetonkuchen 3 und Härterost 2 ist in eine horizontale zur Leistenlängsrichtung 22 senkrechte Antriebsrichtung 32 antreibbar. Zudem ist die Einheit zweckmäßigerweise zusätzlich in Querantriebsrichtung 31 hin- und her antreibbar. Dazu sind die Hydraulikzylinder 23 z.B. nicht am Boden, sondern auf einem horizontal in die genannten Richtungen verfahrbaren bzw. antreibbaren Schlitten angeordnet, auf dem der Härterost 2 abgelegt wird. Des Weiteren besteht die Möglichkeit, entweder den Schneidrahmen 5 lediglich in Rahmenantriebsrichtung 29 antreibbar zu gestalten und die Einheit, insbesondere die Querleisten 4, in Querantriebsrichtung 31 lediglich hin- und her antreibbar zu gestalten oder die Einheit, insbesondere die Querleisten 4, lediglich in Antriebsrichtung 32 antreibbar zu gestalten und den Schneidrahmen 5 in Querantriebsrichtung 31 lediglich hin- und her antreibbar zu gestalten. Der Schneidrahmen 5 und die Einheit, insbesondere die Querleisten 4 sind also in eine zur Leistenlängsrichtung 22 senkrechte, horizontale Richtung relativ zueinander verfahrbar. Zudem sind der Schneidrahmen 5 und die Einheit, insbesondere die Querleisten 4, zweckmäßigerweise zusätzlich in eine zur Leistenlängsrichtung 22 parallele Richtung relativ zueinander verfahrbar.

Selbstverständlich liegt es auch im Rahmen der Erfindung bei der ersten Ausführungsform des erfindungsgemäßen Herstellungsverfahrens, den Kuchen 3 auf die Kuchenoberseite 7 zu kippen, so dass der Kuchen 3 mit der Kuchenoberseite 7 auf dem Härterost 2 und den Querleisten 4 zu liegen kommt. Außerdem liegt es auch im Rahmen der Erfindung anstelle der Schneiddrähte 27 andere geeignete Schneidmittel, insbesondere Messerleisten bzw. Schneidbänder, insbesondere aus Bandstahl, bevorzugt aus Federstahl zu verwenden. Die Schneidbänder weisen jeweils zwei zueinander parallele und einander gegenüberliegende Bandbreitseiten, und zumindest eine, vorzugsweise angefaste und/oder angeschliffene, Schneidkante auf. Dabei sind die Schneidbänder derart in das Rahmengestell 28 eingespannt, dass die Bandbreitseiten senkrecht zur Querantriebsrichtung 31 sind, so dass die Schneidbänder zum Schneiden mit der Schneidkante voraus durch den zu schneidenden Leichtbetonkuchen 3 durch gezogen werden. Zweckmäßigerweise weisen die Schneidbänder eine Bandbreite von 5 bis 15 mm, bevorzugt 8 bis 12 mm auf. Des Weiteren weisen die Schneidbänder vorzugsweise eine Dicke von < 1,5 mm, bevorzugt < 1,2 mm, insbesondere < 1 mm auf. Mit den Schneidbändern sind auch ohne Oszillation, insbesondere aufgrund der scharfen Schneidkanten, sehr glatte Schnittflächen erzeugbar. Bei sehr dünnen Schneidbändern kann auf das Anfasen der Schneidkante auch ohne weiteres verzichtet werden, da die Kante bereits ausreichend scharfkantig ist.

Die Schneidbänder können auch beim Querschneiden und/oder Vertikalschneiden anstelle von Schneiddrähten analog verwendet werden, um sehr glatte Schnittflächen zu erhalten.

Zudem liegt es ebenfalls im Rahmen der Erfindung den Leichtbetonkuchen 3 direkt, ohne vorheriges Positionieren auf dem Härterost 2 auf den Querleisten 4 zu positionieren. Insbesondere kann der Leichtbetonkuchen 3 aus der Gießform gehoben und auf den Querleisten 4 abgelegt werden oder nach dem Kippen auf die Formlängswand von dieser analog zu dem Kippen auf den Härterost 2 auf die Querleisten 4 gekippt werden. In diesem Fall wird der Härterost 2 vor dem Positionieren des Leichtbetonkuchens 3 auf den Querleisten 4 unbeiaden über den Querleisten 4 abgesenkt.

## Patentansprüche

1. Schneideinrichtung zum Schneiden eines schneidfesten Leichtbetonkuchens (3), insbesondere eines Poren- oder Schaumbetonkuchens, in Leichtbetonformkörper (30), insbesondere Poren- oder Schaumbetonformkörper, mit
a) mehreren sich in eine horizontale Leistenlängsrichtung (22) erstreckenden Querleisten (4), die in einer horizontalen zur Leistenlängsrichtung (22) senkrechten Richtung hintereinander angeordnet sind, wobei zueinander benachbarte Querleisten (4) voneinander durch Leistenzwischenräume (26) beabstandet sind, und wobei die Querleisten (4) in vertikaler Richtung auf- und ab antreibbar sind,
b) einem Härterost (2) mit mehreren Querbalken (15) zur Aufnahme eines schneidfesten Leichtbetonkuchens (3), wobei zueinander benachbarte Querbalken (15) durch Balkenzwischenräume (25) voneinander beabstandet sind,
c) einem Schneidrahmen (5) mit zumindest einem darin eingespannten Schneidmittel, insbesondere einem Schneiddraht (27) oder einem Schneidband,
wobei die Leistenzwischenräume (26) so bemessen sind, dass die Querbalken (15) diese, insbesondere in vertikaler Richtung, passieren können und die Balkenzwischenräume (25) so bemessen sind, dass die Querleisten (4) diese, insbesondere in vertikaler Richtung, passieren können,
**gekennzeichnet durch**
eine Hubeinrichtung zum Anheben und Absenken des Härterosts (2) und **dadurch**, dass die Querleisten (4) in vertikaler Richtung einzeln nacheinander auf- und ab antreibbar sind und dass der Schneidrahmen (5) und die Querleisten (4) in eine zur Leistenlängsrichtung (22) senkrechte, horizontale Richtung relativ zueinander, insbesondere hin- und her, verfahrbar sind.

2. Schneideinrichtung nach Anspruch 1,
**dadurch gekennzeichnet, dass**
die Schneideinrichtung (1) als Antriebsmittel für die Querleisten (4) Hydraulikzylinder (23) aufweist, wobei zweckmäßigerweise pro Querleiste (4) zumindest zwei Hydraulikzylinder (23) vorgesehen sind.

3. Schneideinrichtung nach Anspruch 1 oder 2,
**dadurch gekennzeichnet, dass**
der Schneidrahmen (5) ein Rahmengestell (28) aufweist, in das die Schneiddrähte (27) bzw. die Schneidbänder eingespannt sind.

4. Schneideinrichtung nach einem oder mehreren der vorhergehenden Ansprüche,
**dadurch gekennzeichnet, dass**
die Schneiddrähte (27) bzw. die Schneidbänder sich vertikal erstrecken oder um eine zur Leistenlängsrichtung (22) parallele Achse und/oder um eine zur Leistenlängsrichtung (22) senkrechte, horizontale Achse in Bezug zur Vertikalen geneigt sind.

5. Schneideinrichtung nach einem oder mehreren der vorhergehenden Ansprüche,
**dadurch gekennzeichnet, dass**
die Schneiddrähte (27) bzw. die Schneidbänder in einer zu ihrer Längserstreckung parallelen Richtung oszillierend antreibbar sind.

6. Schneideinrichtung nach einem oder mehreren der vorhergehenden Ansprüche,
**dadurch gekennzeichnet, dass**
der Schneidrahmen (5) und die Querleisten (4) in eine zur Leistenlängsrichtung (22) parallele Richtung relativ zueinander, insbesondere hin- und her, verfahrbar sind, wobei vorzugsweise der Schneidrahmen (5) in eine horizontale, zur Leistenlängsrichtung (22) senkrechte Rahmenantriebsrichtung (29) antreibbar ist.

7. Schneideinrichtung nach Anspruch 6,
**dadurch gekennzeichnet, dass**
der Schneidrahmen (5) in eine horizontale, zur Leistenlängsrichtung (22) parallele Querantriebsrichtung (31) hin- und her antreibbar ist.

8. Schneideinrichtung Anspruch 6 oder 7,
**dadurch gekennzeichnet, dass**
die Querleisten (4) mitsamt ihren Antriebsmitteln in eine horizontale zur Leistenlängsrichtung (22) senkrechte Antriebsrichtung (32) antreibbar sind.

9. Schneideinrichtung nach einem oder mehreren der Ansprüche 6 bis 8,
**dadurch gekennzeichnet, dass**
die Querleisten (4) mitsamt ihren Antriebsmitteln in die horizontale zur Leistenlängsrichtung (22) parallele Querantriebsrichtung (31) hin- und her antreibbar sind.

10. Schneideinrichtung nach einem oder mehreren der vorhergehenden Ansprüche,
**dadurch gekennzeichnet, dass**
der Schneidrahmen (5) zumindest eine, vorzugsweise zwei Stützleisten zur Abstützung des Leichtbetonkuchens (3) beim Schneidvorgang aufweist, wobei zweckmäßigerweise eine Stützleiste vor den Schneiddrähten (27) bzw. den Schneidbändern angeordnet ist.

11. Schneideinrichtung nach einem oder mehreren der vorhergehenden Ansprüche,
**dadurch gekennzeichnet, dass**
der Schneidrahmen (5) zumindest eine sich parallel zur Leistenlängsrichtung (22) erstreckende Messerleiste aufweist, mittels der ein Vertikalschnitt durchführbar ist, insbesondere die Kuchenunterseite (6) begradigbar ist.

12. Vorrichtung zur Herstellung von Leichtbetonformkörpern (30), insbesondere Poren- oder Schaumbetonformkörpern , mit
a) einer Gießform zum Befüllen mit Frischbetonmasse,
b) einer Schneideinrichtung zum Schneiden eines schneidfesten Leichtbetonkuchens (3) in die Leichtbetonformkörper (30) nach einem oder mehreren der vorhergehenden Ansprüche,
c) Mitteln zum hydrothermalen Härten des geschnittenen Leichtbetonkuchens (3), insbesondere einem Autoklaven.

13. Verfahren zum Schneiden von schneidfesten Leichtbetonkuchen (3), insbesondere Poren- oder Schaumbetonkuchen, in Leichtbetonformkörper (30), insbesondere Poren- oder Schaumbetonformkörper, unter Verwendung einer Schneideinrichtung (1) nach einem oder mehreren der Ansprüche 1-11, mit folgenden Verfahrensschritten:
a) Absenken des Härterosts (2) über den Querleisten (4), wobei die Querleisten (4) durch die Balkenzwischenräume (25) durch tauchen und die Querbalken (15) die Leistenzwischenräume (26) passieren und der Härterost (2) so weit abgesenkt wird, dass der Härterost (2) außerhalb, insbesondere unterhalb der relativen Bewegungsbahn des Schneidrahmens (5) liegt,
b) Positionieren des Leichtbetonkuchens (3) auf den Querleisten (4),
c) Schneiden des Leichtbetonkuchens (3) mittels Durchziehen des zumindest einen Schneidmittels, insbesondere des Schneiddrahts (27) bzw. des Schneidbandes durch den Leichtbetonkuchen (3) und/oder Durchdrücken des Leichtbetonkuchens (3) durch das zumindest eine Schneidmittel, insbesondere den Schneiddraht (27) bzw. das Schneidband, wobei die Querleisten (4) einzeln und nacheinander abgesenkt und wieder aufwärts verfahren werden, so dass ein unterer Teil des Rahmengestells (28) des Schneidrahmens (5) einen Zwischenraum zwischen dem Leichtbetonkuchen (3) und den Querleisten (4) passiert,
d) Anheben des Härterosts (2), wobei die Querleisten (4) durch die Balkenzwischenräume (25) durch tauchen und die Querbalken (15) die Leistenzwischenräume (26) passieren und der Leichtbetonkuchen (3) vom Härterost (2) aufgenommen wird.

14. Verfahren nach Anspruch 13,
**dadurch gekennzeichnet, dass**
der Leichtbetonkuchen (3) vor dem Absenken des Härterosts (2) auf diesem positioniert wird und der Härterost (2) mit dem darauf liegenden Leichtbetonkuchen (3) so weit abgesenkt wird, dass der Leichtbetonkuchen (3) beim Absenken des Härterosts (2) auf den Querleisten (4) abgelegt wird.

15. Verfahren nach Anspruch 13 oder 14,
**dadurch gekennzeichnet, dass**
ein Leichtbetonkuchen (3) verwendet wird, der quaderförmig ausgebildet ist und eine im wesentlichen ebene Kuchenunterseite (6), eine dazu parallele Kuchenoberseite (7), zwei sich gegenüberliegende, im wesentlichen ebene, zu der Kuchenunterseite (6) senkrechte und sich in eine Kuchenlängsrichtung (8) erstreckende Kuchenlängsseiten (9) und zwei zu den Kuchenlängsseiten (9) und zur Kuchenunterseite (6) senkrechte, sich in eine Kuchenquerrichtung (10) erstreckende Kuchenstirnseiten (11) aufweist, und der zweckmäßigerweise eine Längserstreckung in Richtung der Kuchenlängsrichtung (8) aufweist und dessen Erstreckung in Kuchenquerrichtung (10) zweckmäßigerweise größer als in eine Kuchenhöhenrichtung (12) ist, wobei
der Leichtbetonkuchen (3) vorzugsweise längsgeschnitten wird, also durchgehende Schnittflächen oder Schnittfiächenbereiche erzeugt werden, die parallel zur Kuchenlängsrichtung (8) und parallel zur Kuchenhöhenrichtung (12) sind.

16. Verfahren nach Anspruch 15,
**dadurch gekennzeichnet, dass**
der Leichtbetonkuchen (3) quergeschnitten wird, also durchgehende Schnittflächen oder Schnittflächenbereiche erzeugt werden, die parallel zur Kuchenquerrichtung (10) und parallel zur Kuchenhöhenrichtung (12) sind.

17. Verfahren nach Anspruch 15 oder 16,
**dadurch gekennzeichnet, dass**
konturierte, insbesondere bogenförmige Schnittflächen, vorzugsweise Schnittflächen mit sinusartigem Verlauf oder Nut- und Feder aufweisende Schnittflächen oder gezackte Schnittflächen erzeugt werden.

18. Verfahren nach einem oder mehreren der Ansprüche 13 bis 17,
**dadurch gekennzeichnet, dass**
der Schneidrahmen (5) und eine die Querleisten (4), den Leichtbetonkuchen (3) und den Härterost (2) aufweisende Einheit beim Schneiden in eine zur Leistenlängsrichtung (22) senkrechte, horizontale Richtung und zweckmäßigerweise zusätzlich in eine zur Leistenlängsrichtung (22) parallele Richtung relativ zueinander bewegt werden, wobei vorzugsweise der Schneidrahmen (5) beim Schneiden in eine horizontale, zur Leistenlängsrichtung (22) senkrechte Rahmenantriebsrichtung (29), insbesondere hin- und her, verfahren wird.

19. Verfahren nach Anspruch 18,
**dadurch gekennzeichnet, dass**
der gesamte Schneidrahmen (5) beim Schneiden in eine horizontale, zur Leistenlängsrichtung (22) parallele Querantriebsrichtung (31), vorzugsweise hin- und her, verfahren wird.

20. Verfahren nach einem oder mehreren der Ansprüche 14 bis 19,
**dadurch gekennzeichnet, dass**
der Leichtbetonkuchen (3) auf den Härterost (2) gekippt wird, wobei zweckmäßigerweise zum Kippen der Härterost (2) an die Kuchenunterseite (6) oder die Kuchenoberseite (7) angesetzt wird, wobei die Querbalken (15) parallel zur Kuchenquerrichtung (10) und mit ihren Balkenoberseiten (18) der Kuchenunterseite (6) oder der Kuchenoberseite (7) zugewandt positioniert werden und anschließend der Leichtbetonkuchen (3) um eine horizontale, zur Kuchenlängsrichtung (8) parallele Achse gekippt wird, so dass er mit einer seiner Kuchenunterseite (6) oder der Kuchenoberseite (7) auf den Balkenoberseiten (18) zu liegen kommt.

21. Verfahren nach einem oder mehreren der Ansprüche 14 bis 19,
**dadurch gekennzeichnet, dass**
der Leichtbetonkuchen (3) mit seiner Kuchenunterseite (6) auf dem Härterost (2) mittels einer Greifeinrichtung, insbesondere in vertikaler Richtung, abgelegt wird.

22. Verfahren nach einem oder mehreren der Ansprüche 13 bis 21,
**dadurch gekennzeichnet, dass**
immer höchstens zwei bis drei zueinander benachbarte Querleisten (4) gleichzeitig abgesenkt werden.

23. Verfahren nach einem oder mehreren der Ansprüche 13 bis 22,
**dadurch gekennzeichnet, dass**
der Leichtbetonkuchen (3) mittels zumindest einer Messerleiste gleichzeitig zum Schneiden mittels der Schneiddrähte (27) bzw. der Schneidbänder vertikal geschnitten wird.

24. Verfahren zur Herstellung von Leichtbetonformkörpern (30), insbesondere Poren- oder Schaumbetonformkörper, unter Verwendung einer Vorrichtung nach Anspruch 12, mit folgenden Verfahrensschritten:
a) Gießen von Frischbetonmasse in die Gießform,
b) Ansteifen lassen der Frischbetonmasse zum schneidfesten Leichtbetonkuchen (3),
c) Schneiden des Leichtbetonkuchens (3) gemäß dem Verfahren nach einem oder mehreren der Ansprüche 13 bis 23,
d) Hydrothermales Härten der Leichtbetonformkörper (30).

25. Verfahren nach Anspruch 24,
**dadurch gekennzeichnet, dass**
der Leichtb.etonkuchen (3) vor dem durchgehenden Längsschneiden, das mittels der Schneideinrichtung (1) erfolgt, durchgehend quer geschnitten wird, also Schnittflächen erzeugt werden, die parallel zu einer Kuchenquerrichtung (10) und zur Kuchenhöhenrichtung (12) sind, wobei zweckmäßigerweise zum durchgehenden Querschneiden Schneiddrähte in eine Rostquerrichtung (16), in die sich die Querbalken (15) erstrecken, über dem Härterost (2) vor dem Auflegen des Leichtbetonkuchens (3), gespannt werden und diese anschließend nach oben durch den Leichtbetonkuchen (3) durchgezogen werden.

26. Verfahren nach Anspruch 24 oder 25,
**dadurch gekennzeichnet, dass**
der Leichtbetonkuchen (3) vor dem durchgehenden Längsschneiden mittels der Schneideinrichtung (1) vertikal geschnitten wird, also durchgehende Schnittflächen erzeugt werden, die parallel zur Kuchenlängsrichtung (8) und parallel zur Kuchenquerrichtung (10) sind.

27. Verfahren nach einem oder mehreren der Ansprüche 24 bis 26,
**dadurch gekennzeichnet, dass**
der schneidfeste Leichtbetonkuchen (3) mitsamt der Gießform um eine horizontale, zu einer Kuchenlängsrichtung (8) parallele, horizontale Achse gekippt wird, so dass er mit einer seiner beiden Kuchenlängsseiten (9) auf einer Formlängswand der Gießform zu liegen kommt, wobei zweckmäßigerweise zum durchgehenden Querschneiden der auf der Formlängswand stehende Leichtbetonkuchen (3) durch einen Schneidrahmen mit sich horizontal und parallel zur Kuchenhöhenrichtung (12) erstreckenden Schneiddrähten, die in Kuchenlängsrichtung (8) hintereinander angeordnet sind, in vertikaler Richtung durchgefahren wird oder der Schneidrahmen in vertikaler Richtung durch den Leichtbetonkuchen (3) durchgezogen wird, und
wobei zweckmäßigerweise der Leichtbetonkuchen (3) beim durchgehenden Vertikalschneiden mittels sich vertikal erstreckender Messerleisten geschnitten wird, die den Leichtbetonkuchen (3) in einer zur Kuchenlängsrichtung (8) parallelen Richtung passieren, wobei der Leichtbetonkuchen (3) relativ zu den Messerleisten in Kuchenlängsrichtung (8) bewegt wird und/oder die Messerleisten relativ zum Leichtbetonkuchen (3) in Kuchenlängsrichtung (8) bewegt werden.

28. Verfahren nach einem oder mehreren der Ansprüche 24 bis 26,
**dadurch gekennzeichnet, dass**
nachdem der Leichtbetonkuchen (3) seine Schneidfestigkeit erreicht hat, die Wände der Gießform seitlich weggeklappt und der Leichtbetonkuchen (3) an seinen Kuchenlängsseiten (9) und seinen Kuchenstirnseiten (11) mittels einer Greifeinrichtung gegriffen wird, von dem Boden der Gießform abgehoben und auf den Härterost (2) mit seiner Kuchenunterseite (6) aufgelegt wird.

## Claims

1. Cutting device for cutting a cut-resistant lightweight concrete cake (3), in particular an aerated or porous concrete cake, into lightweight concrete shaped bodies (30), in particular aerated or porous concrete shaped bodies, comprising
a) a plurality of transverse bars (4) which extend in a horizontal bar longitudinal direction (22) and which are arranged behind one another in a horizontal direction perpendicular to the bar longitudinal direction (22), wherein mutually adjacent transverse bars (4) are spaced apart by bar gaps (26), and wherein the transverse bars (4) can be driven up and down in the vertical direction,
b) a hardening grate (2) with a plurality of transverse beams (15) for accommodating a cut-resistant lightweight concrete cake (3), wherein mutually adjacent transverse beams (15) are spaced apart by beam gaps (25),
c) a cutting frame (5) with at least one cutting means clamped therein, in particular a cutting wire (27) or a cutting band,
wherein the bar gaps (26) are dimensioned in such a way that the transverse beams can pass through them, in particular in the vertical direction, and the beam gaps (25) are dimensioned in such a way that the transverse bars (4) can pass through them, in particular in the vertical direction, **characterized by** a lifting device for raising and lowering the hardening grate (2) and such that the transverse bars (4) can be driven up and down individually in succession in the vertical direction and such that the cutting frame (5) and the transverse bars (4) can be moved relative to one another, in particular back and forth, in a horizontal direction perpendicular to the bar longitudinal direction (22).

2. Cutting device according to Claim 1, **characterized in that** the cutting device (1) has hydraulic cylinders (23) as drive means for the transverse bars (4), wherein at least two hydraulic cylinders (23) are expediently provided for each transverse bar (4).

3. Cutting device according to Claim 1 or 2, **characterized in that** the cutting frame (5) has a framework (28) into which the cutting wires (27) or the cutting bands are clamped.

4. Cutting device according to one or more of the preceding claims, **characterized in that** the cutting wires (27) or the cutting bands extend vertically or are inclined with respect to the vertical about an axis parallel to the bar longitudinal direction (22) and/or about a horizontal axis perpendicular to the bar longitudinal direction (22).

5. Cutting device according to one or more of the preceding claims, **characterized in that** the cutting wires (27) or the cutting bands can be driven in an oscillating manner in a direction parallel to their longitudinal extent.

6. Cutting device according to one or more of the preceding claims, **characterized in that** the cutting frame (5) and the transverse bars (4) can be moved relative to one another, in particular back and forth, in a direction parallel to the bar longitudinal direction (22), wherein the cutting frame (5) can preferably be driven in a horizontal frame drive direction (29) perpendicular to the bar longitudinal direction (22).

7. Cutting device according to Claim 6, **characterized in that** the cutting frame (5) can be driven back and forth in a horizontal transverse drive direction (31) parallel to the bar longitudinal direction (22).

8. Cutting device according to Claim 6 or 7, **characterized in that** the transverse bars (4) together with their drive means can be driven in a horizontal drive direction (32) perpendicular to the bar longitudinal direction (22).

9. Cutting device according to one or more of Claims 6 to 8, **characterized in that** the transverse bars (4) together with their drive means can be driven back and forth in the horizontal transverse drive direction (31) parallel to the bar longitudinal direction (22).

10. Cutting device according to one or more of the preceding claims, **characterized in that** the cutting frame (5) has at least one, preferably two, support bars for supporting the lightweight concrete cake (3) during the cutting operation, a support bar being expediently arranged in front of the cutting wires (27) or the cutting bands.

11. Cutting device according to one or more of the preceding claims, **characterized in that** the cutting frame (5) has at least one cutter bar extending parallel to the bar longitudinal direction (22), by means of which a vertical cut can be carried out, in particular the cake underside (6) can be levelled.

12. Apparatus for producing lightweight concrete shaped bodies (30), in particular aerated or porous concrete shaped bodies, comprising
a) a casting mould for filling with wet concrete compound,
b) a cutting device for cutting a cut-resistant lightweight concrete cake (3) into the lightweight concrete shaped bodies (30) according to one or more of the preceding claims,
c) means for the hydrothermal hardening of the cut lightweight concrete cake (3), in particular an autoclave.

13. Method for cutting cut-resistant lightweight concrete cakes (3), in particular aerated or porous concrete cakes, into lightweight concrete shaped bodies (30), in particular aerated or porous concrete shaped bodies, using a cutting device (1) according to one or more of Claims 1-11, comprising the following method steps:
a) lowering the hardening grate (2) over the transverse bars (4), wherein the transverse bars (4) penetrate through the beam gaps (25) and the transverse beams (15) pass through the bar gaps (26) and the hardening grate (2) is lowered to such an extent that the hardening grate (2) is situated outside, in particular below, the relative movement path of the cutting frame (5),
b) positioning the lightweight concrete cake (3) onto the transverse bars (4),
c) cutting the lightweight concrete cake (3) by means of pulling the at least one cutting means, in particular the cutting wire (27) or the cutting band, through the lightweight concrete cake (3) and/or pressing the lightweight concrete cake (3) through the at least one cutting means, in particular the cutting wire (27) or the cutting band, wherein the transverse bars (4) are lowered individually and in succession and moved upwards again, with the result that a lower part of the framework (28) of the cutting frame (5) passes through a gap between the lightweight concrete cake (3) and the transverse bars (4),
d) raising the hardening grate (2), wherein the transverse bars (4) penetrate through the beam gaps (25) and the transverse beams (15) pass through the bar gaps (26) and the lightweight concrete cake (3) is accommodated by the hardening grate (2).

14. Method according to Claim 13, **characterized in that**, prior to lowering the hardening grate (2), the lightweight concrete cake (3) is positioned on it and the hardening grate (2) together with the lightweight concrete cake (3) situated thereon is lowered to such an extent that the lightweight concrete cake (3) is deposited on the transverse bars (4) during the lowering of the hardening grate (2).

15. Method according to Claim 13 or 14, **characterized in that** a lightweight concrete cake (3) is used which is cuboidal and has a substantially planar cake underside (6), a cake upper side (7) parallel thereto, two mutually opposite, substantially planar cake longitudinal sides (9) which are perpendicular to the cake underside (6) and extend in a cake longitudinal direction (8), and two cake end sides (11) which are perpendicular to the cake longitudinal sides (9) and to the cake underside (6) and which extend in a cake transverse direction (10), and which cake expediently has a longitudinal extension in the direction of the cake longitudinal direction (8) and whose extension in the cake transverse direction (10) is expediently greater than in a cake vertical direction (12), wherein the lightweight concrete cake (3) is preferably cut longitudinally, that is to say continuous cut surfaces or cut surface regions are produced which are parallel to the cake longitudinal direction (8) and parallel to the cake vertical direction (12).

16. Method according to Claim 15, **characterized in that** the lightweight concrete cake (3) is cut transversely, that is to say continuous cut surfaces or cut surface regions are produced which are parallel to the cake transverse direction (10) and parallel to the cake vertical direction (12).

17. Method according to Claim 15 or 16, **characterized in that** contoured, in particular arcuate, cut surfaces, preferably cut surfaces with a sinusoidal profile or cut surfaces having tongue and groove or serrated cut surfaces are produced.

18. Method according to one or more of Claims 13 to 17, **characterized in that**, during cutting, the cutting frame (5) and a unit comprising the transverse bars (4), the lightweight concrete cake (3) and the hardening grate (2) are moved relative to one another in a horizontal direction perpendicular to the bar longitudinal direction (22) and expediently in addition in a direction parallel to the bar longitudinal direction (22), wherein, during cutting, the cutting frame (5) is preferably moved, in particular back and forth, in a horizontal frame drive direction (29) perpendicular to the bar longitudinal direction (22).

19. Method according to Claim 18, **characterized in that**, during cutting, the entire cutting frame (5) is moved, preferably back and forth, in a horizontal transverse drive direction (31) parallel to the bar longitudinal direction (22).

20. Method according to one or more of Claims 14 to 19, **characterized in that** the lightweight concrete cake (3) is tilted onto the hardening grate (2), wherein, for the purpose of tilting, the hardening grate (2) is expediently applied to the cake underside (6) or the cake upper side (7), wherein the transverse beams (15) are positioned parallel to the cake transverse direction (10) and with their beam upper sides (18) facing the cake underside (6) or the cake upper side (7) and the lightweight concrete cake (3) is then tilted about a horizontal axis parallel to the cake longitudinal direction (8), with the result that it comes to bear with its cake underside (6) or the cake upper side (7) on the beam upper sides (18).

21. Method according to one or more of Claims 14 to 19, **characterized in that** the lightweight concrete cake (3) is deposited with its cake underside (6) on the hardening grate (2) by means of a gripping device, in particular in the vertical direction.

22. Method according to one or more of Claims 13 to 21, **characterized in that** at most two to three mutually adjacent transverse bars (4) are lowered at the same time.

23. Method according to one or more of Claims 13 to 22, **characterized in that** the lightweight concrete cake (3) is cut vertically by means of at least one cutter bar at the same time as the cutting by means of the cutting wires (27) or the cutting bands.

24. Method for producing lightweight concrete shaped bodies (30), in particular aerated or porous concrete shaped bodies, using an apparatus according to Claim 12, comprising the following method steps:
a) pouring wet concrete compound into the casting mould,
b) allowing the wet concrete compound to stiffen to form the cut-resistant lightweight concrete cake (3),
c) cutting the lightweight concrete cake (3) according to the method according to one or more of Claims 13 to 23,
d) hydrothermal hardening of the lightweight concrete shaped bodies (30).

25. Method according to Claim 24, **characterized in that**, prior to the continuous longitudinal cutting which is carried out by means of the cutting device (1), the lightweight concrete cake (3) is cut continuously transversely, that is to say cut surfaces are produced which are parallel to a cake transverse direction (10) and to the cake vertical direction (12), wherein, for the purpose of continuous transverse cutting, cutting wires are expediently clamped, in a grate transverse direction (16) in which the transverse beams (15) extend, over the hardening grate (2) before the lightweight concrete cake (3) is placed thereon, and these cutting wires are then pulled upwards through the lightweight concrete cake (3).

26. Method according to Claim 24 or 25, **characterized in that**, prior to the continuous longitudinal cutting, the lightweight concrete cake (3) is cut vertically by means of the cutting device (1), that is to say continuous cut surfaces are produced which are parallel to the cake longitudinal direction (8) and parallel to the cake transverse direction (10).

27. Method according to one or more of Claims 24 to 26, **characterized in that** the cut-resistant lightweight concrete cake (3) is tilted together with the casting mould about a horizontal axis parallel to a cake longitudinal direction (8), with the result that it comes to bear with one of its two cake longitudinal sides (9) on a mould longitudinal wall of the casting mould, wherein, for the purpose of continuous transverse cutting, the lightweight concrete cake (3) situated on the mould longitudinal wall is expediently moved in the vertical direction through a cutting frame having cutting wires which extend horizontally and parallel to the cake vertical direction (12) and which are arranged behind one another in the cake longitudinal direction (8), or the cutting frame is pulled in the vertical direction through the lightweight concrete cake (3), and wherein, during the continuous vertical cutting operation, the lightweight concrete cake (3) is expediently cut by means of vertically extending cutter bars which pass through the lightweight concrete cake (3) in a direction parallel to the cake longitudinal direction (8), wherein the lightweight concrete cake (3) is moved relative to the cutter bars in the cake longitudinal direction (8) and/or the cutter bars are moved relative to the lightweight concrete cake (3) in the cake longitudinal direction (8).

28. Method according to one or more of Claims 24 to 26, **characterized in that**, after the lightweight concrete cake (3) has achieved its cutting resistance, the walls of the casting mould are swung away laterally and the lightweight concrete cake (3) is gripped at its cake longitudinal sides (9) and its cake end sides (11) by means of a gripping device, lifted from the bottom of the casting mould and placed on the hardening grate (2) with its cake underside (6).

## Revendications

1. Dispositif de coupe pour découper une galette de béton léger (3) résistante à la coupe, en particulier une galette en béton alvéolaire ou béton cellulaire, en corps moulés en béton léger (30), en particulier des corps moulés en béton alvéolaire ou béton cellulaire, comportant
a) plusieurs barres transversales (4) qui s'étendent dans une direction longitudinale (22) horizontale et qui sont disposées les unes derrière les autres dans une direction orientée horizontalement à la direction longitudinale (22) des barres, des barres transversales (4) voisines étant séparées l'une de l'autre par des espaces intermédiaires (26), et les barres transversales (4) pouvant être actionnées vers le haut et le bas dans la direction verticale,
b) une grille de durcissement (2) avec plusieurs traverses (15) destinées à recevoir une galette de béton léger (3) résistante à la coupe, des traverses (15) voisines étant séparées l'une de l'autre par des espaces intermédiaires (25),
c) un cadre de coupe (5) avec au moins un moyen de coupe, monté dans celui-ci, en particulier un fil de coupe (27) ou une bande de coupe,
sachant que les espaces intermédiaires (26) entre les barres sont dimensionnés de telle sorte que les traverses (15) peuvent passer à travers ceux-ci, notamment dans la direction verticale, et les espaces intermédiaires (25) entre les traverses sont dimensionnés de telle sorte que les barres transversales (4) peuvent passer à travers ceux-ci, notamment dans la direction verticale,
**caractérisé par**
un dispositif de levage pour lever et abaisser la grille de durcissement (2) et en ce que les barres transversales (4) peuvent être actionnées vers le haut et le bas dans la direction verticale les unes après les autres, et en ce que le cadre de coupe (5) et les barres transversales (4) peuvent être déplacés l'un par rapport aux autres, en particulier en va-et-vient, dans une direction horizontale, perpendiculaire à la direction longitudinale (22) des barres.

2. Dispositif de coupe selon la revendication 1, **caractérisé en ce que** le dispositif de coupe (1) comporte des vérins hydrauliques (23) faisant fonction de moyens d'entraînement pour les barres transversales (4), au moins deux vérins hydrauliques (23) par barre transversale (4) étant prévus judicieusement.

3. Dispositif de coupe selon la revendication 1 ou 2, **caractérisé en ce que** le cadre de coupe (5) comporte un châssis (28), dans lequel sont montés les fils de coupe (27) ou les bandes de coupe.

4. Dispositif de coupe selon une ou plusieurs des revendications précédentes, **caractérisé en ce que** les fils de coupe (27) ou les bandes de coupe s'étendent verticalement ou sont inclinés par rapport à la verticale autour d'un axe parallèle à la direction longitudinale (22) des barres et/ou autour d'un axe horizontal, perpendiculaire à la direction longitudinale (22) des barres.

5. Dispositif de coupe selon une ou plusieurs des revendications précédentes, **caractérisé en ce que** les fils de coupe (27) ou les bandes de coupe peuvent être actionnés en oscillations dans une direction parallèle à leur extension longitudinale.

6. Dispositif de coupe selon une ou plusieurs des revendications précédentes, **caractérisé en ce que** le cadre de coupe (5) et les barres transversales (4) peuvent être déplacés l'un par rapport aux autres, en particulier en va-et-vient, dans une direction parallèle à la direction longitudinale (22) des barres, sachant que, de préférence, le cadre de coupe (5) peut être actionné dans une direction d'entraînement (29) horizontale, perpendiculaire à la direction longitudinale (22) des barres.

7. Dispositif de coupe selon la revendication 6, **caractérisé en ce que** le cadre de coupe (5) peut être actionné en va-et-vient dans une direction d'entraînement transversale (31) horizontale, parallèle à la direction longitudinale (22) des barres.

8. Dispositif de coupe selon la revendication 6 ou 7, **caractérisé en ce que** les barres transversales (4), y compris leurs moyens d'entraînement, peuvent être actionnées dans une direction d'entraînement (32) horizontale, perpendiculaire à la direction longitudinale (22) des barres.

9. Dispositif de coupe selon une ou plusieurs des revendications 6 à 8, **caractérisé en ce que** les barres transversales (4), y compris leurs moyens d'entraînement, peuvent être actionnés en va-et-vient dans la direction d'entraînement transversale (31) horizontale, parallèle à la direction longitudinale (22) des barres.

10. Dispositif de coupe selon une ou plusieurs des revendications précédentes, **caractérisé en ce que** le cadre de coupe (5) comporte au moins une, de préférence deux barres de support pour supporter la galette de béton léger (3) pendant le processus de coupe, sachant que, de manière judicieuse, une barre de support est agencée devant les fils de coupe (27) ou les bandes de coupe.

11. Dispositif de coupe selon une ou plusieurs des revendications précédentes, **caractérisé en ce que** le cadre de coupe (5) comporte au moins une barre à tranchants, qui s'étend parallèlement à la direction longitudinale (22) des barres et qui permet de réaliser une coupe verticale, en particulier la face inférieure (6) de la galette peut être rectifiée.

12. Dispositif pour la réalisation de corps moulés en béton léger (30), en particulier des corps moulés en béton alvéolaire ou béton cellulaire, comportant
a) un moule destiné à être rempli avec du béton frais,
b) un dispositif de coupe pour découper une galette de béton léger (3) résistante à la coupe en corps moulés en béton léger (30) selon une ou plusieurs des revendications précédentes,
c) des moyens pour le durcissement hydrothermal de la galette de béton léger (3) coupée, en particulier un autoclave.

13. Procédé pour découper une galette de béton léger (3) résistante à la coupe, en particulier une galette en béton alvéolaire ou béton cellulaire, en corps moulés en béton léger (30), en particulier des corps moulés en béton alvéolaire ou béton cellulaire, moyennant l'utilisation d'un dispositif de coupe (1) selon une ou plusieurs des revendications 1 à 11, comportant les étapes suivantes :
a) abaissement de la grille de durcissement (2) sur les barres transversales (4), sachant que les barres transversales (4) s'engagent à travers les espaces intermédiaires (25) entre les traverses, et les traverses (15) passent à travers les espaces intermédiaires (26) entre les barres, et la grille de durcissement (2) est abaissé sur une distance telle que la grille de durcissement (2) se situe à l'extérieur du cadre de coupe (5), en particulier en dessous de la trajectoire du mouvement relatif du cadre de coupe (5),
b) positionnement de la galette de béton léger (3) sur les barres transversales (4),
c) coupe de la galette de béton léger (3) en tirant ledit au moins un moyen de coupe, en particulier le fil de coupe (27) ou la bande de coupe, à travers la galette de béton léger (3) et/ou en poussant la galette de béton léger (3) à travers ledit au moins un moyen de coupe, en particulier le fil de coupe (27) ou la bande de coupe, les barres transversales (4) étant abaissées et levées à nouveau individuellement et les unes après les autres, de telle sorte qu'une partie inférieure du châssis (28) du cadre de coupe (5) passe à travers un espace intermédiaire entre la galette de béton léger (3) et les barres transversales (4),
d) relèvement de la grille de durcissement (2), les barres transversales (4) s'engageant à travers les espaces intermédiaires (25) entre les traverses, et les traverses (15) passant à travers les espaces intermédiaires (26) entre les barres, et la galette de béton léger (3) est reçue sur la grille de durcissement (2).

14. Procédé selon la revendication 13, **caractérisé en ce que** la galette de béton léger (3) est positionnée sur la grille de durcissement (2) avant l'abaissement de celle-ci, et la grille de durcissement (2), conjointement avec la galette de béton léger (3) posée sur celle-ci, est abaissée sur une distance telle que la galette de béton léger (3) est déposée sur les barres transversales (4) pendant l'abaissement de la grille de durcissement (2).

15. Procédé selon la revendication 13 ou 14, **caractérisé en ce que** la galette de béton léger (3) utilisée est une galette parallélépipédique qui comporte une face inférieure (6) sensiblement plane, une face supérieure (7) parallèle à cette dernière, deux faces longitudinales (9) face à face, sensiblement planes, perpendiculaires à la face inférieure (6) et orientées dans le sens longitudinal (8) de la galette, et deux faces frontales (11) perpendiculaires aux faces longitudinales (9) et à la face inférieure (6) et orientées dans le sens transversal (10) de la galette, et qui, judicieusement, possède une dimension longitudinale dans la direction du sens longitudinal (8) de la galette et dont la dimension dans le sens transversal (10) de la galette est judicieusement supérieure à celle dans le sens vertical (12) de la galette, sachant que la galette de béton léger (3) est coupée de préférence dans le sens longitudinal, c'est-à-dire que l'on réalise des surfaces de coupe ou les zones de surface de coupe continues qui sont parallèles au sens longitudinal (8) de la galette et parallèles au sens vertical (12) de la galette.

16. Procédé selon la revendication 15, **caractérisé en ce que** la galette de béton léger (3) est coupée en sens transversal, c'est-à-dire que l'on réalise des surfaces de coupe ou des zones de surface de coupe continues qui sont parallèles au sens transversal (10) de la galette et parallèles au sens vertical (12) de la galette.

17. Procédé selon la revendication 15 ou 16, **caractérisé en ce que** l'on réalise des surfaces de coupe profilées, en particulier courbes, de préférence des surfaces de coupe avec un tracé sinusoïdal ou des surfaces de coupe à rainure et languette ou des surfaces de coupe dentées.

18. Procédé selon une ou plusieurs des revendications 13 à 17, **caractérisé en ce que**, pendant le processus de coupe, le cadre de coupe (5) et une unité, comportant les barres transversales (4), la galette de béton léger (3) et la grille de durcissement (2), sont déplacés l'un par rapport à l'autre dans une direction horizontale, perpendiculaire à la direction longitudinale (22) des barres et, judicieusement en plus, dans une direction parallèle à la direction longitudinale (22) des barres, sachant que, de préférence, le cadre de coupe (5) est déplacé, en particulier en va-et-vient, pendant le processus de coupe, dans une direction d'entraînement (29) horizontale, perpendiculaire à la direction longitudinale (22) des barres.

19. Procédé selon la revendication 18, **caractérisé en ce que**, pendant le processus de coupe, l'ensemble du cadre de coupe (5) est déplacé, en particulier en va-et-vient, dans une direction d'entraînement transversale (31) horizontale, parallèle à la direction longitudinale (22) des barres.

20. Procédé selon une ou plusieurs des revendications 14 à 19, **caractérisé en ce que** l'on fait basculer la galette de béton léger (3) sur la grille de durcissement (2), sachant que, pour le basculement, la grille de durcissement (2) est appliquée judicieusement contre la face inférieure (6) ou la face supérieure (7) de la galette, les traverses (15) étant amenées dans une position parallèle au sens transversal (10) de la galette et avec leurs faces supérieures (18) orientées vers la face inférieure (6) ou la face supérieure (7) de la galette, et, ensuite, on fait basculer la galette de béton léger (3) autour d'un axe horizontal, parallèle au sens longitudinal (8) de la galette, de telle sorte qu'elle vient en appui avec sa face inférieure (6) ou sa face supérieure (7) sur les faces supérieures (18) des traverses.

21. Procédé selon une ou plusieurs des revendications 14 à 19, **caractérisé en ce que** la galette de béton léger (3) est déposée avec sa face inférieure (6) sur la grille de durcissement (2) au moyen d'un dispositif de préhension, en particulier dans la direction verticale.

22. Dispositif de coupe selon une ou plusieurs des revendications 13 à 21, **caractérisé en ce que** toujours au maximum deux à trois barres transversales (4) voisines sont abaissées en même temps.

23. Procédé selon une ou plusieurs des revendications 13 à 22, **caractérisé en ce que** la galette de béton léger (3) est coupée verticalement au moyen d'au moins une barre à tranchants, en même temps pour la coupe au moyen des fils de coupe (27) ou les bandes de coupe.

24. Procédé pour la réalisation de corps moulés en béton léger (30), en particulier des corps moulés en béton alvéolaire ou béton cellulaire, moyennant l'utilisation d'un dispositif selon la revendication 12, comportant les étapes suivantes :
a) introduction du béton frais dans le moule,
b) épaississement du béton frais pour obtenir la galette de béton léger (3) résistante à la coupe,
c) coupe de la galette de béton léger (3) selon le procédé selon une ou plusieurs des revendications 13 à 23,
d) durcissement hydrothermal des corps moulés en béton léger (30).

25. Procédé selon la revendication 24, **caractérisé en ce que** la galette de béton léger (3), avant la coupe de part en part dans le sens longitudinal, exécutée au moyen du dispositif de coupe (1), est coupée transversalement de part en part, c'est-à-dire que l'on réalise des surfaces de coupe qui sont parallèles au sens transversal (10) de la galette et au sens vertical (12) de la galette, sachant que, judicieusement, pour la coupe transversale de part en part, des fils de coupe sont tendus au-dessus de la grille de durcissement (2)avant la pose de la galette de béton léger (3), dans un sens transversal (16) de la grille, dans lequel s'étendent les traverses (15), et lesdits fils sont tirés ensuite vers le haut à travers la galette de béton léger (3).

26. Procédé selon la revendication 24 ou 25, **caractérisé en ce que** la galette de béton léger (3), avant la coupe longitudinale de part en part au moyen du dispositif de coupe (1), est coupée verticalement, c'est-à-dire que l'on réalise des surfaces de coupe continues, qui sont parallèles au sens longitudinal (8) de la galette et parallèles au sens transversal (10) de la galette.

27. Procédé selon une ou plusieurs des revendications 24 à 26, **caractérisé en ce que** l'on fait basculer la galette de béton léger (3) résistante à la coupe, conjointement avec le moule, autour d'un axe horizontal parallèle au sens longitudinal (8) de la galette, de telle sorte qu'elle vient en appui avec ses deux faces longitudinales (9) contre une paroi longitudinale du moule, sachant que, judicieusement, pour la coupe transversale de part en part, la galette de béton léger (3) posée sur la paroi longitudinale du moule, est déplacée dans le sens vertical à travers un cadre de coupe muni de fils de coupe, qui sont orientés horizontalement et parallèlement au sens vertical (12) de la galette et qui sont disposés les uns derrière les autres dans le sens longitudinal (8) de la galette, ou le cadre de coupe est déplacé dans le sens vertical à travers la galette de béton léger (3), et sachant que, judicieusement, la galette de béton léger (3) pendant la coupe verticale de part en part est coupée avec des barres à tranchants orientées verticalement, lesquelles passent à travers la galette de béton léger (3) dans une direction parallèle au sens longitudinal (8) de la galette, la galette étant déplacée par rapport aux barres à tranchants dans le sens longitudinal (8) de la galette et/ou les barres à tranchants étant déplacées par rapport à la galette de béton léger (3) dans le sens longitudinal (8) de la galette.

28. Procédé selon une ou plusieurs des revendications 24 à 26, **caractérisé en ce que**, après que la galette de béton léger (3) a obtenu sa résistance à la coupe, les parois du moule sont rabattues latéralement et la galette de béton léger (3) est saisie par un dispositif de préhension au niveau de ses faces longitudinales (9) et de ses faces frontales (11), est soulevée du fond du moule et est déposée avec sa face inférieure (6) sur la grille de durcissement (2).
